# EUROPEAN PATENT SPECIFICATION

(11) **EP 1 470 708 B1**
(45) Date of publication and mention of the grant of the patent: **31.10.2018**
(21) Application number: 02806228.9
(22) Date of filing: 23.12.2002
(51) Int. Cl.: H04N 5/445

(54) **METHOD FOR DISPLAYING EPG VIDEO-CLIP PREVIEWS ON DEMAND**
VERFAHREN ZUM ANZEIGEN VON EPG-VIDEOCLIP-VORANSICHTEN AUF ANFRAGE
PROCEDE PERMETTANT D'AFFICHER DES EXTRAITS DE VIDEOCLIPS DE GUIDE ELECTRONIQUE DE PROGRAMME A LA DEMANDE

(30) Priority: 28.12.2001 US 33317
(43) Date of publication of application: 27.10.2004
(73) Proprietor: Thomson Licensing, 92130 Issy-les-Moulineaux (FR)
(72) Inventor: BETZ, Steve, Craig, Zionsville, IN 46077 (US); HASS, Herman, Paul, Pittsboro, IN 46167 (US); FRANKEN, Alan, Carmel, IN 46035 (US)
(74) Representative: de la Fouchardière, Marie-Noëlle
(86) International application number: PCT/US2002/041420
(87) International publication number: WO 2003/058954

(56) References cited:
- WO-A-96/07270
- WO-A-98/26596
- WO-A1-99/60790
- US-A- 5 585 838
- US-A- 5 751 282
- US-A- 5 812 123
- US-A- 6 075 575
- US-B1- 6 526 577
- US-B1- 6 563 515

## Description

### FIELD OF THE INVENTION

This invention relates to interactive television systems, and more particularly to an interactive television system which includes an electronic program guide (EPG) that displays a video clip preview while browsing and navigating through the EPG's grid guide.

### BACKGROUND OF THE INVENTION

Video on Demand (VOD) systems conventionally have a graphical (often HTML) ordering menu that display text based descriptions of a program along with a still picture of a "movie poster", or some representation of the program content. From the ordering menu, there exists means for navigating to a "button" to activate a request for the program and confirm a desire to spend a particular dollar amount before the program is delivered for viewing. In some cases, from that same ordering menu there exists a "Preview" button next to the "Order" button that executes the VOD delivery of a free preview. However, the program and the free video preview are not linked (logically) in software. Instead, the program and the free video preview are handled as two separate pieces of video content that must be requested and served independently of each other.

The absence of the video preview content on EPG and Personal Video Recorder (PVR) directories is the biggest drawback. Thus, the viewer is provided limited or little information regarding the programming available, and the content owners are provided few means of promoting their content in this media. While video previews of movies and yet to be aired broadcast television programming routinely exist, they are aired during commercial slots. There is no assurance that viewers interested in this content will actually see these commercial slots. Hence, the broadcaster and/or program owner has limited means of marketing their program to potential viewers, and must purchase or allocate many commercial time slots to sufficiently improve the chances that interested viewers will become aware of and interested in their content. The availability of Video Clip Previews on Demand will help raise the viewer's awareness and interest in programming that has yet to be aired in a more cost effective manner that improves the entertainment experience for viewers.

Even when video previews are available, such as in the VOD example, there are some drawbacks in that the viewer must explicitly push buttons to get access to the video previews and then go back to the ordering menu and push more buttons to order the program, which is cumbersome. In view of the foregoing, there is a continuing need for an interactive television system that provides Video-Clip Previews on Demand by automatically launching a video clip preview of a highlighted program title cell of the electronic program guide (EPG), after a predetermined delay, with an assumption that the viewer wants to see the video clip preview, if available, thereby making the shopping, navigating and browsing experience more convenient and enjoyable.

Furthermore, there is a continuing need for an interactive television system that links the video clip preview with its associated "destination content" to further facilitate the viewing, ordering, or recording of the "destination" program, in the present, or in the future.

WO 96/07270 discloses a method and apparatus for displaying television programs and related text and in particular the moving images of a television program are displayed in a PIP window on the screen of a television monitor and textual information related to the television program is displayed in the background on the screen. The audio portion of the television program displayed in the PIP window is also reproduced by the sound system of the television monitor. A television viewer can use a PIP format for display of future television program listings from a program schedule data base in the background and moving images of a video clip of one of the program listings in the background display. Video clips are stored on a video tape cassette that is loaded into a VCR. Addresses are linked to respective future program listings in the data base so that a video clip can be accessed on the tape when a program listing is designated in the database. Following the highlighting of a title of a future program, the corresponding video clip is retrieved from the tape in the VCR and coupled to the television receiver for display in the PIP window.

WO 98/26596 discloses a preview system activated from an on-screen programming guide that displays a video preview of a selected particular program on the display screen. The video preview clip is displayed on less than the full screen so that the video can be highly-compressed to save bandwidth.

US-A-5751282 discloses an interactive television system having a centrally located head end server coupled to remotely located set-top boxes. Each set-top box runs an electronic programming guide that provides an on-screen program grid listing program titles in relation to their scheduled viewing times and channels. A data base resident at the head end server supplies the program titles and scheduled viewing times of the past, current and future programs to the electronic programming guide. The head end server transmits real time video data streams of the available programs to the EPG.

US-A-5 585 838 deals the inability of a user to query a source of program schedule information of on-line program guides in order to obtain additional program information and provides an interactive viewing system including a central head end in bi-directional communication with a viewer station. The viewer station has an interactive station controller, a video display operably coupled to the interactive station controller and an input device for providing user input to the interactive station controller. The head end makes available to the user stations a number of programs at different times and on different channels. The program time guide includes a first memory located at the head end that stores program schedule information that identifies the times and channels on which various programs are available. A second memory stores a portion of the same program schedule information that is stored at the head end.

US-A-6075575 is related to the problem of how to provide a user with a system that allows the user to navigate through various menus and submenus of the schedule guide and to interact with the various items contained therein so as to quickly and efficiently browse through the television guide and to perform various actions without having to remove their eyes from the television. This is achieved by providing a remote control comprising an input assembly that includes a variety of function buttons for performing functions such as changing channels, a local controller for displacing a movable cursor on the television display and a global controller for navigating between different screen areas.

An object of the present invention is an interactive television/broadcast system according to claim 1 and a method of displaying video-clip previews on demand according to claim 9.

Other features of the invention are found in the dependent claims.

### SUMMARY OF THE INVENTION

An interactive television system and method according to the attached claims.

### BRIEF DESCRIPTION OF THE DRAWINGS

FIG. 1A shows an electronic program guide according to the present invention.
FIG. 1B shows the electronic program guide according to the present invention displaying the video clip preview.
FIG. 1C shows the full screen video clip preview.
FIG. 2 shows a remote control device of the present invention.
FIG. 3 shows flowchart illustrating the process for displaying video clip previews according to the present invention.
FIG. 4 shows an interactive television or broadcast system according with the present invention.

### DETAILED DESCRIPTION OF THE INVENTION

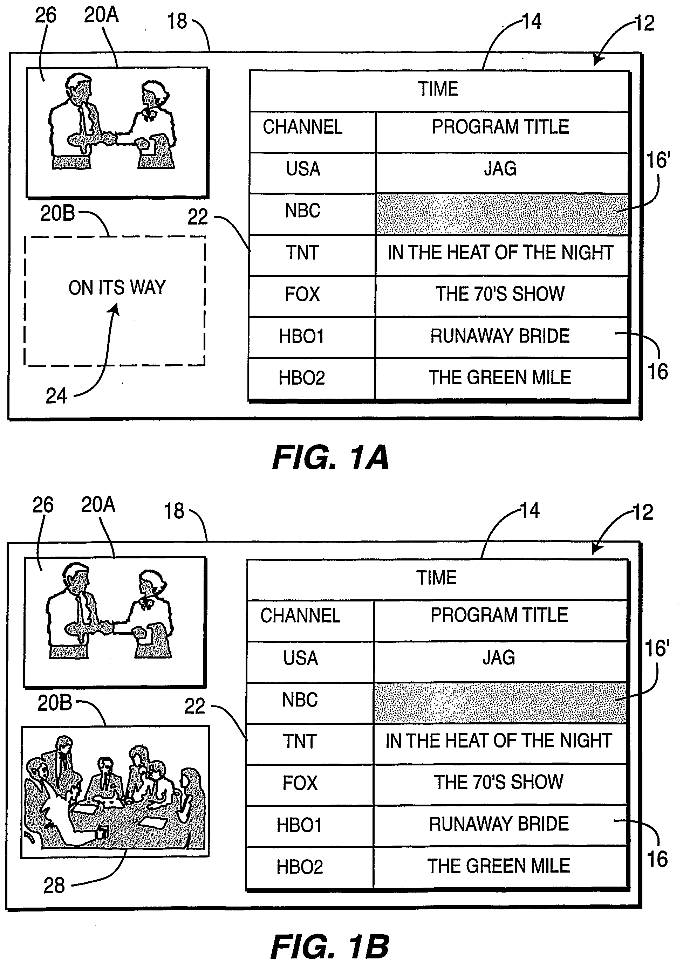

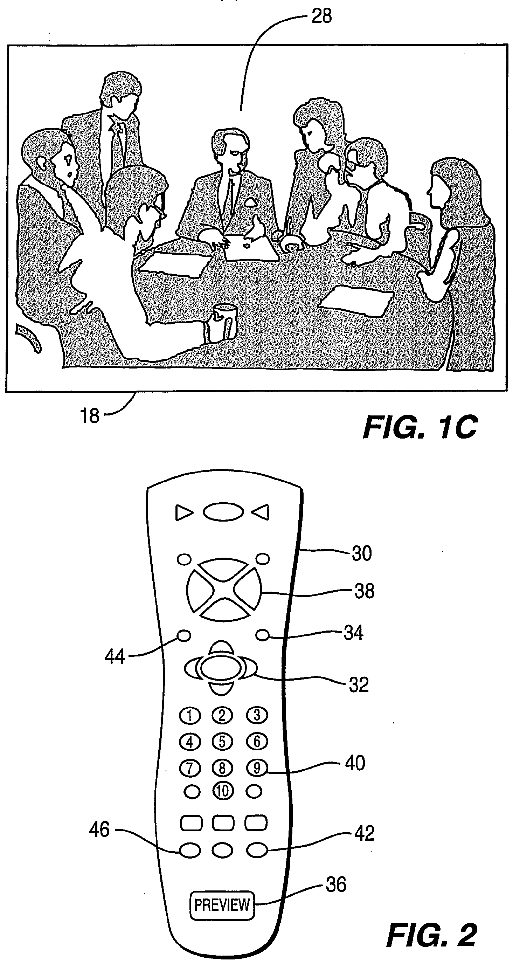

FIGS. 1A and 1B shows an EPG grid guide 14 of an electronic programming guide (EPG) 12 according to the present invention displayed on display screen 18. The EPG grid guide 14 includes a plurality of program titled cells 16 which display the program title of a program of a channel 22 for a displayed scheduled time. While navigating within the EPG grid guide 14, a program titled cell 16' displaying the program title can be highlighted. By using the up/down/left/right navigation buttons 32 on the remote control device 30 (FIG. 2), the viewer navigates through the EPG grid guide 14 to discover not only what is currently being broadcast, but what programming is scheduled to be broadcast in the near future. Presently, some EPGs store up to 14 days of such future programming. In general, the EPG grid guide 14 illustrated is a single display page and typically includes many pages identifying by time up to 14 days of future programming.

While EPG grid guides 14 have many formats, many EPG grid guides 14 have a smaller display window 20A used to display currently tuned programming wherein the currently tuned programming was displayed on display screen 18 prior to the selection and display of the EPG grid guide 14. Thus, as the viewer navigates and browses the EPG grid guide 14 for upcoming programming, scenes of the currently tuned programming are not necessarily missed. In one embodiment, the display window 20A is used to display a video clip preview 28 when loaded.

In an alternate embodiment, a second display window 20B, shown in phantom, displays the video clip preview 28 simultaneously with the currently tuned programming shown in display window 20A. However the audio track for the video clip preview 28 dominates when the video clip preview 28 is showing. The display windows 20A and 20B function in a similar manner as picture and picture displays, but with different relative scaling of video images, and different graphic composition.

As the viewer navigates and browses through the EPG grid guide 14 and the program titled cell 16' highlighted, descriptive text, sometimes referred to as "metadata" associated with such program title, is displayed. Likewise, during the viewing of said content, if the viewer makes a selection, such as by pressing the "INFO" button 34 next to the up/down/left/right navigation buttons 32, the same descriptive text, associated with such program title, is displayed.

The remote control device 30 further includes a "Guide" button 44 to launch the EPG 12 on the display screen 18. Furthermore, the remote control device 30 includes channel up/down and volume up/down buttons 38, a numerical keypad 40, VCR control buttons 42 including "Record" button 46. The remote control device 30 also includes other buttons for turning on and off the display screen 18 and for performing other conventional functions. If the program has associated therewith a video clip preview 28, during the playing of the video clip preview 28 or after the playing of the video clip preview 28, the viewer may select a record option. The record option may record a program associated with the video clip preview 28 scheduled to broadcast in the future or at the present time.

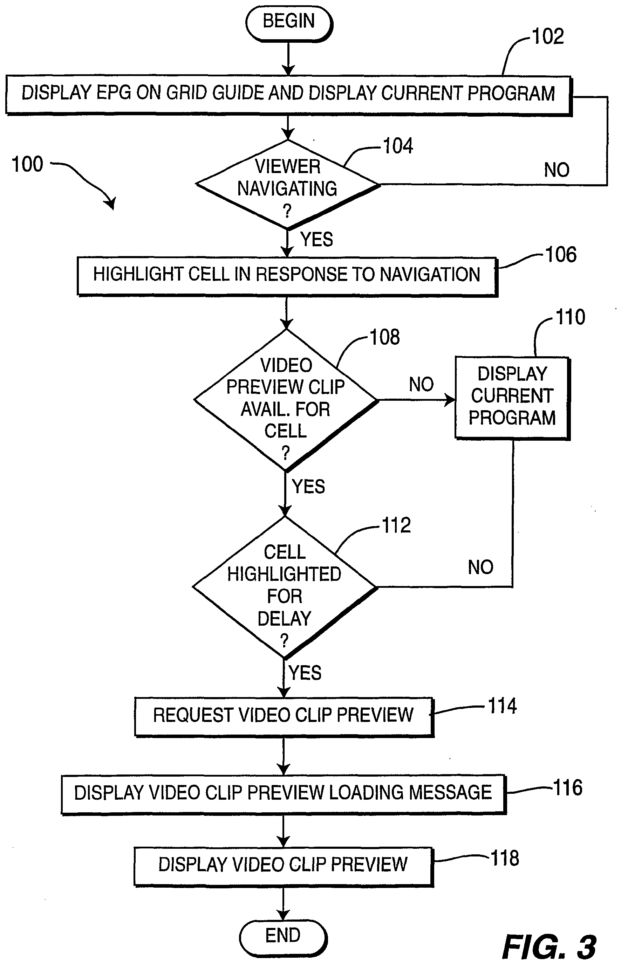

Referring now to FIG. 3, a flowchart of a process 100 for displaying video clip previews according to the present invention is shown. The process begins at Step 102 where the EPG grid guide 14 is displayed on the display screen 18 and the currently tuned programming is displayed in the smaller display window 20A. Step 102 is followed by Step 104 where a determination is made whether the viewer is navigating. If the determination is "NO," the process 100 continues at Step 102 to display the EPG grid guide 14 and the currently tuned programming. However, if the determination is "YES," Step 102 is followed by Step 106 at which a cell is highlighted in response to the navigation.

Step 106 is followed by Step 108 where a determination is made whether a video clip preview is available for the cell 16' or in other words, for the program title. Furthermore, those cells of the program titled cells 16 that have a video clip preview 28 available for viewing may be colored, bordered or differently set apart in some manner to provide an indication to the consumer of such availability. If the determination is "NO," Step 108 is followed by Step 110 where the small display window 20A continues to display the currently tuned programming. However, if the determination is "YES," Step 108 is followed by Step 112 where a determination is made as to whether a cell is highlighted for a predetermined delay, such as, without limitation, one (1) second. If the determination is "NO," Step 112 is followed by Step 110 where the small display window 20A continues to display the currently tuned programming. However, if the determination is "YES," Step 112 is followed by Step 114 where a request for the video clip preview 28 is sent to a VOD server or a head end to launch the video clip preview 28.

In an alternate embodiment, not covered by the claims, the predetermined delay is substituted with a "One-Touch Display" format, where the viewer must actively request the video clip preview 28 such as by pressing a "Preview" button 36, described in detail below. In lieu of the "Preview" button 36, a virtual "Preview" button may be provided on the EPG grid guide 14 or some other means for selecting a preview option to display available video clip previews. Network operators, wishing to preserve network bandwidth by eliminating those requests that are not "real" may prefer this embodiment, at the expense of viewer convenience.

Step 114 is followed by Step 116 where a loading message or icon 24 is displayed notifying the viewer of the soon to be displayed video clip preview. Step 116 is followed by Step 118 where the video clip preview 28 is displayed on small display window 20A or optionally display window 20B wherein the audio track of the video clip preview 28 dominates and is heard. If only one display window 20A is provided, the loading message or icon 24 would be displayed on such window or in close proximity thereto.

In a still further alternate embodiment, a still image of an available video clip preview 28 can be displayed in the small display window 20B. In such alternative, the loading message or icon 24 may be optional. The loading message or icon 24 or alternately the still picture of the video clip preview provide a means to notify the viewer of the impending or imminent display of the video clip preview 28.

In view of the forgoing, the present invention provides for Video-Clip Previews on Demand by automatically launching a video clip preview 28 of a highlighted program titled cell 16', after a predetermined delay. When the cell 16' remains highlighted for said predetermined delay, it is assumed that the viewer wants to see the video clip preview 28 associated with the cell 16', if a video clip preview 28 is available. Accordingly, the viewer does not have to make any selection (press any button) to display an available video clip preview. Since the viewer only needs to navigate and browse to highlight a cell of a program title to request an available video clip preview, such display process is defined as a "No-Touch Display" process. The "No-Touch Display" process launches the video clip preview 28 based on an assumption principle effectuated by the lapse of said predetermined delay from which a program titled cell 16' is highlighted.

Referring now to FIGS. 1C and 2, the remote control 30 is provided with a "Preview" button 36, which allows the viewer to display the video clip preview 28 on the full screen display 18. Alternately, or in addition to the "Preview" button 36, the remote control 30 allows the viewer to navigate to the display window 20B and select the video clip preview 28. Upon selection of the displayed video clip preview 28, the video clip preview 28 is displayed on the full screen display 18. Thus, the present invention provides a "One-Touch Full Screen Display" option for viewing video clip previews.

In the embodiment where the "One-Touch Display" format is used the viewer would actively request the video clip preview 28 by pressing the "Preview" button 36. Thereafter, the video clip preview 28 is displayed on the full screen display 18.

In a VOD system the request for the video preview clip 28 would be sent to one or more VOD servers that reside on a local network, in relative proximity to the subscriber's home. Typically, VOD servers are used to serve up full-length feature films. Presently, VOD servers will serve a limited number of local subscribers, on the order of 1000 or so, with an assumed usage rate of about 10%. These servers may be specialized in design, to serve short-form video content, with simultaneous usage rate percentages approaching 90% during "prime time".

When the video clip preview 28 is viewed as "full screen" format, the video clip preview 28 may be played from start to finish. Thereafter, display screen 18 automatically reverts back to display the EPG grid guide 14 or, alternately, a VOD/Jukebox ordering menu (NOT SHOWN). The latter is preferred for video preview clips 28 associated with ordered Movies.

In the preferred embodiment, the video clip preview 28 may be restricted to parental controls. Conventionally, EPG set-ups, such as the DirecTV user interface, have general purpose user profiles that do not need a password to use. Other user profiles require passwords. For example, a general "family" user profile may have restrictions in terms of content ratings to exclude certain content-rated, e.g., PG-13, R or X, programming. Accordingly, the video clip preview 28 associated with a PG-13, R or X rated program title would be excluded from these profiles. Alternatively, the EPG 12 may have a virtual "button" as part of the EPG grid guide 14 to activate recording of a program.

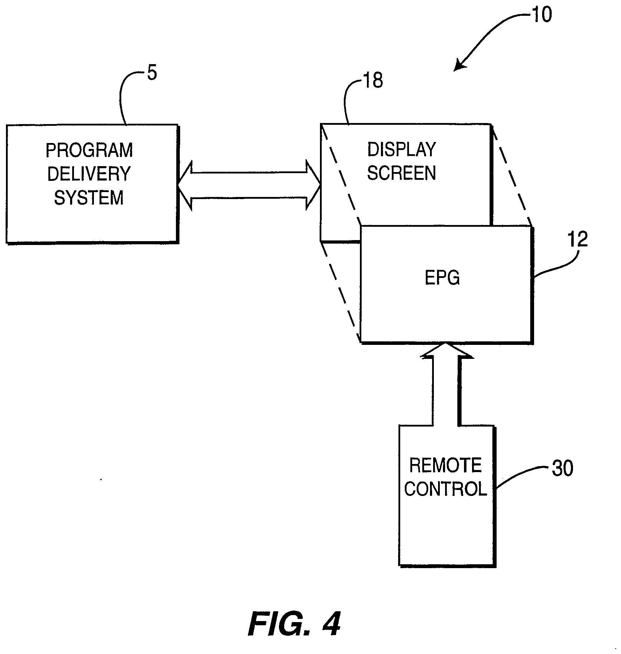

Referring now to FIG. 4 the interactive television or broadcast system 10 of the present invention includes remote control 30, display screen 18 and EPG 12 coupled to program delivery system 5. The program delivery system 5 may include a cable head end, satellite system and/or at least one VOD server. As can be appreciated, the display screen 18 includes a television, a PC monitor, or the like. Furthermore, the television may be cable ready or may have coupled thereto a cable box or other device for recording, ordering and interacting with the display screen 18.

The EPG 12 links the video clip preview 18 to the destination content (program) such that the destination content (program) can be viewed, ordered, recorded, or otherwise activated during the viewing of the video clip preview with which it is associated. The present invention embeds the expected commands, such as ordering protocols outlined by RTSP, into the context of the video clip preview 28.

In one embodiment, not covered by the claims, a number of video clip previews 28 can be pre-loaded to a hard disk drive within a Set Top Box device, to expedite the loading and playing of such previews, thus overcoming network congestion, etc.

## Claims

1. An interactive television/broadcast system comprising: a display screen (18); an input for receiving a signal including an electronic program guide (EPG) (12) and providing the EPG for display on the display screen, the EPG having at least one display window (20A) and a grid guide (14), the grid guide (14) including a plurality of program titled cells displayed on the display screen wherein browsing and navigating through the grid guide highlights a program titled cell, **characterized in that**, after remaining at the highlighted program titled cell for a predetermined delay, a video-clip preview is requested to be loaded and (1) the EPG (12) immediately displays a still image of the video-clip preview in the at least one display window if a video clip preview is available for the highlighted program titled cell, and (2) when the video-clip preview is loaded, the EPG (12) displays the video-clip preview in the at least one display window by automatically launching the video clip preview; the video-clip preview being retrieved from a Video on Demand server residing on a local network and the system is adapted to inhibit the launching of the video clip preview when requested if a program which has yet to be broadcasted, which corresponds to the video clip preview and corresponds to the highlighted program titled cell, is restricted according to a user profile based parental control.

2. The system according to Claim 1, wherein the at least one display window includes a first display window (20A) for displaying a currently tuned program and a second display window (20B) for displaying the video clip preview wherein an audio track of the video clip preview is heard.

3. The system according to Claim 1, wherein the at least one display window displays a loading message or icon representative of an imminent video clip preview.

4. The system according to Claim 1, further comprising a remote control device (30), the remote control device (30) having means for navigating to the at least one display window and selecting the at least one display window to display the video clip preview on the display screen (18).

5. The system according to Claim 1, further comprising a remote control device (30), the remote control device (30) including: navigation buttons (32) for navigating and browsing through the grid guide; and, a preview button for selecting to display the video clip preview on the display screen (18).

6. The system according to Claim 5, wherein the remote control device (30) further includes a record button for recording a program, the program having associated therewith a video clip preview adapted to be displayed on the at least one display window.

7. The system according to Claim 1, wherein those program titled cells of the plurality of program titled cells having associated therewith a video clip preview are distinguished in appearance from other program titled cells not having an associated video clip preview to indicate the availability of the video clip preview.

8. A method of displaying video-clip previews on demand comprising the steps of: displaying, on a display screen (18), an electronic program guide (EPG) (12) having at least one display window and a grid guide (14), the grid guide including a plurality of program titled cells; wherein browsing and navigating through the grid guide highlights a program titled cell; **characterized in that**, after the highlighted programmed titled cell remains highlighted for a predetermined delay, a video-clip preview is requested to be loaded and (1) the EPG (12) immediately displays a still image of the video-clip preview in the at least one display window if a video clip preview is available for the highlighted program titled cell, and (2) when the video-clip preview is loaded, the EPG (12) displays the video-clip preview in the at least one display window by automatically launching the video clip preview; the video clip preview being retrieved from a Video on Demand server residing on a local network, and **in that** the display of the video clip preview is inhibited if a program which has yet to be broadcasted, corresponding to the video clip preview and corresponding to the highlighted program titled cell, is restricted according to a user profile based parental control.

9. The method according to Claim 8, wherein the at least one display window includes a first display window (20A) and a second display window (20B); and further comprising the steps of: displaying in the first display window (20A) a currently tuned program; and displaying in the second display window (20B) the video clip preview; playing an audio track of the video clip preview simultaneously with the displaying step of the video clip preview.

10. The method according to Claim 8, further comprising the step of displaying in the at least one display window a loading message or icon representative of an imminent video clip preview.

11. The method according to Claim 8, further comprising the step of navigating to the at least one display window and selecting the at least one display window to display the video clip preview on the display screen (18).

12. The method according to Claim 8, further comprising the step of selecting a preview button and displaying the video clip preview on the display screen (18).

13. The method according to Claim 8, further comprising the step of selecting a record option for recording a program, wherein the program has associated therewith a video clip preview adapted to be displayed on the at least one display window and wherein the selecting may be performed during or after playing of the video clip preview.

14. The method according to Claim 13, wherein the recording option may record the program associated with the video clip preview scheduled to be broadcast in the future or at a present time.

15. The system according to Claim 1, wherein the predetermined delay is at least one second.

## Patentansprüche

1. Interaktives Fernseh-/Ausstrahlungssystem, umfassend: einen Anzeigebildschirm (18); einen Eingang zum Empfangen eines Signals, das eine elektronische Programmübersicht (EPG) (12) beinhaltet und die EPG zur Anzeige auf dem Anzeigebildschirm bereitstellt, wobei die EPG mindestens ein Anzeigefenster (20A) und eine Gitterübersicht (14) aufweist, wobei die Gitterübersicht (14) mehrere programmbetitelte Zellen beinhaltet, die auf dem Anzeigebildschirm angezeigt werden, wobei ein Durchblättern und Navigieren durch die Gitterübersicht eine programmbetitelte Zelle hervorhebt, **dadurch gekennzeichnet, dass** nach Verbleiben an der hervorgehobenen programmbetitelten Zelle für eine vorherbestimmte Verzögerung ein Laden einer Videoclipvorschau angefordert wird und (1) die EPG (12) unmittelbar ein Standbild der Videoclipvorschau in dem mindestens einen Anzeigefenster anzeigt, wenn eine Videoclipvorschau für die hervorgehobene programmbetitelte Zelle verfügbar ist, und (2) wenn die Videoclipvorschau geladen wird, die EPG (12) die Videoclipvorschau in dem mindestens einen Anzeigefenster durch automatisches Starten der Videoclipvorschau anzeigt; wobei die Videoclipvorschau von einem Video-on-Demand-Server, der sich auf einem lokalen Netzwerk befindet, abgerufen wird und das System dazu eingerichtet ist, das Starten der Videoclipvorschau bei Anforderung zu unterbinden, wenn ein Programm, das noch auszustrahlen ist, das der Videoclipvorschau entspricht und der hervorgehobenen programmbetitelten Zelle entspricht, gemäß einer benutzerprofilbasierten Kindersicherung eingeschränkt ist.

2. System nach Anspruch 1, wobei das mindestens eine Anzeigefenster ein erstes Anzeigefenster (20A) zum Anzeigen eines gegenwärtig eingestellten Programms und ein zweites Anzeigefenster (20B) zum Anzeigen der Videoclipvorschau, wobei eine Tonspur der Videoclipvorschau zu hören ist, beinhaltet.

3. System nach Anspruch 1, wobei das mindestens eine Anzeigefenster eine Ladenachricht oder ein Ladesymbol, die bzw. das für eine bevorstehende Videoclipvorschau repräsentativ ist, anzeigt.

4. System nach Anspruch 1, das weiterhin eine Fernbedienungsvorrichtung (30) umfasst, wobei die Fernbedienungsvorrichtung (30) Mittel zum Navigieren zu dem mindestens einen Anzeigefenster und Auswählen des mindestens einen Anzeigefensters, um die Videoclipvorschau auf dem Anzeigebildschirm (18) anzuzeigen, aufweist.

5. System nach Anspruch 1, das weiterhin eine Fernbedienungsvorrichtung (30) umfasst, wobei die Fernbedienungsvorrichtung (30) Folgendes beinhaltet: Navigationsknöpfe (32) zum Navigieren und Durchblättern durch die Gitterübersicht und einen Vorschauknopf zum Auswählen, um die Videoclipvorschau auf dem Anzeigebildschirm (18) anzuzeigen.

6. System nach Anspruch 5, wobei die Fernbedienungsvorrichtung (30) weiterhin eine Aufnahmetaste zum Aufnehmen eines Programms beinhaltet, wobei das Programm eine Videoclipvorschau damit assoziiert aufweist, die dazu eingerichtet ist, auf dem mindestens einen Anzeigefenster angezeigt zu werden.

7. System nach Anspruch 1, wobei jene programmbetitelten Zellen der mehreren programmbetitelten Zellen, die eine Videoclipvorschau damit assoziiert aufweisen, sich im Aussehen von anderen programmbetitelten Zellen, die nicht eine Videoclipvorschau damit assoziiert aufweisen, unterscheiden, um die Verfügbarkeit der Videoclipvorschau anzugeben.

8. Verfahren zum Anzeigen von Videoclipvorschauen auf Verlangen, das die folgenden Schritte umfasst: Anzeigen einer elektronischen Programmübersicht (EPG) (12) mit mindestens einem Anzeigefenster und einer Gitterübersicht (14) auf einem Anzeigebildschirm (18), wobei die Gitterübersicht mehrere programmbetitelte Zellen beinhaltet; wobei ein Durchblättern und Navigieren durch die Gitterübersicht eine programmbetitelte Zelle hervorhebt; **dadurch gekennzeichnet, dass**, nachdem die hervorgehobene programmbetitelte Zelle für eine vorherbestimmte Verzögerung hervorgehoben geblieben ist, ein Laden einer Videoclipvorschau angefordert wird und (1) die EPG (12) unmittelbar ein Standbild der Videoclipvorschau in dem mindestens einen Anzeigefenster anzeigt, wenn eine Videoclipvorschau für die hervorgehobene programmbetitelte Zelle verfügbar ist, und (2) wenn die Videoclipvorschau geladen wird, die EPG (12) die Videoclipvorschau in dem mindestens einen Anzeigefenster durch automatisches Starten der Videoclipvorschau anzeigt; wobei die Videoclipvorschau von einem Video-on-Demand-Server, der sich auf einem lokalen Netzwerk befindet, abgerufen wird, und dass die Anzeige der Videoclipvorschau unterbunden wird, wenn ein Programm, das noch auszustrahlen ist, der Videoclipvorschau entspricht und der hervorgehobenen programmbetitelten Zelle entspricht, gemäß einer benutzerprofilbasierten Kindersicherung eingeschränkt ist.

9. Verfahren nach Anspruch 8, wobei das mindestens eine Anzeigefenster ein erstes Anzeigefenster (20A) und ein zweites Anzeigefenster (20B) beinhaltet; und das weiterhin die folgenden Schritte umfasst: Anzeigen eines gegenwärtig eingestellten Programms in dem ersten Anzeigefenster (20A) und Anzeigen der Videoclipvorschau in dem zweiten Anzeigefenster (20B); gleichzeitiges Abspielen einer Tonspur der Videoclipvorschau mit dem Anzeigeschritt der Videoclipvorschau.

10. Verfahren nach Anspruch 8, das weiterhin den Schritt des Anzeigens einer Ladenachricht oder eines Ladesymbols, die bzw. das für eine bevorstehende Videoclipvorschau repräsentativ ist, in dem mindestens einen Anzeigefenster umfasst.

11. Verfahren nach Anspruch 8, das weiterhin den Schritt des Navigierens zu dem mindestens einen Anzeigefenster und des Auswählens des mindestens einen Anzeigefensters, um die Videoclipvorschau auf dem Anzeigebildschirm (18) anzuzeigen, umfasst.

12. Verfahren nach Anspruch 8, das weiterhin den Schritt des Auswählens eines Vorschauknopfs und des Anzeigens der Videoclipvorschau auf dem Anzeigebildschirm (18) umfasst.

13. Verfahren nach Anspruch 8, das weiterhin den Schritt des Auswählens einer Aufnahmeoption zum Aufnehmen eines Programms umfasst, wobei das Programm eine Videoclipvorschau damit assoziiert aufweist, die dazu eingerichtet ist, auf dem mindestens einen Anzeigefenster angezeigt zu werden, und wobei das Auswählen während oder nach dem Abspielen der Videoclipvorschau durchgeführt werden kann.

14. Verfahren nach Anspruch 13, wobei die Aufnahmeoption das mit der Videoclipvorschau assoziierte Programm, das zur Ausstrahlung in Zukunft oder zur Jetztzeit eingeplant ist, aufnehmen kann.

15. System nach Anspruch 1, wobei die vorherbestimmte Verzögerung eine Sekunde ist.

## Revendications

1. Système de télévision/diffusion interactif comprenant : un écran d'affichage (18) ; une entrée pour recevoir un signal incluant un guide de programmes électronique (EPG) (12) et fournir l'EPG pour affichage sur l'écran d'affichage, l'EPG ayant au moins une fenêtre d'affichage (20A) et une grille (14), la grille (14) incluant une pluralité de cellules de programmes avec titres affichées sur l'écran d'affichage, dans lequel l'exploration et la navigation dans la grille mettent en surbrillance une cellule de programme avec titre, **caractérisé en ce que**, lorsque la cellule de programme avec titre reste en surbrillance pendant une durée prédéterminée, le chargement d'un extrait de clip vidéo est demandé et (1) l'EPG (12) affiche immédiatement une image fixe de l'extrait de clip vidéo dans la au moins une fenêtre d'affichage si un extrait de clip vidéo est disponible pour la cellule de programme avec titre mise en surbrillance, et (2) lorsque l'extrait de clip vidéo est chargé, l'EPG (12) affiche l'extrait de clip vidéo dans la au moins une fenêtre d'affichage en lançant automatiquement l'extrait de clip vidéo ; l'extrait de clip vidéo étant issu d'un serveur de vidéos à la demande résidant sur un réseau local et le système étant adapté pour bloquer le lancement de l'extrait de clip vidéo lorsqu'il est demandé si un programme qui doit encore être diffusé, qui correspond à l'extrait de clip vidéo et qui correspond à la cellule de programme avec titre mise en surbrillance, est limité selon un contrôle parental basé sur le profil utilisateur.

2. Système selon la revendication 1, dans lequel la au moins une fenêtre d'affichage inclut une première fenêtre d'affichage (20A) pour afficher un programme actuellement sélectionné et une deuxième fenêtre d'affichage (20B) pour afficher l'extrait de clip vidéo où une piste audio de l'extrait de clip vidéo est lue.

3. Système selon la revendication 1, dans lequel la au moins une fenêtre d'affichage affiche un message ou une icône de chargement indiquant l'affichage imminent d'un extrait de clip vidéo.

4. Procédé selon la revendication 1, comprenant en outre un dispositif de commande à distance (30), le dispositif de commande à distance (30) disposant d'un moyen pour naviguer vers la au moins une fenêtre d'affichage et sélectionner la au moins une fenêtre d'affichage pour afficher l'extrait de clip vidéo sur l'écran d'affichage (18).

5. Système selon la revendication 1, comprenant en outre un dispositif de commande à distance (30), le dispositif de commande à distance (30) incluant des boutons de navigation (32) pour explorer et naviguer dans la grille ; et un bouton de prévisualisation pour sélectionner l'affichage de l'extrait de clip vidéo sur l'écran d'affichage (18).

6. Système selon la revendication 5, dans lequel le dispositif de commande à distance (30) comprend en outre un bouton d'enregistrement pour enregistrer un programme, le programme ayant un extrait de clip vidéo associé adapté pour être affiché sur la au moins une fenêtre d'affichage.

7. Système selon la revendication 1, dans lequel ces cellules de programmes avec titres de la pluralité de cellules de programmes avec titres ayant un extrait de clip vidéo associé se distinguent par leur apparence d'autres cellules de programmes avec titres n'ayant pas d'extrait de clip vidéo associé pour indiquer la disponibilité de l'extrait de clip vidéo.

8. Procédé pour afficher des extraits de clip vidéo à la demande comprenant les étapes suivantes : affichage, sur un écran d'affichage (18), d'un guide de programmes électronique (EPG) (12) ayant au moins une fenêtre d'affichage et une grille (14), la grille incluant une pluralité de cellules de programmes avec titres ; dans lequel l'exploration et la navigation dans la grille mettent en surbrillance une cellule de programme avec titre ; **caractérisé en ce que**, lorsque la cellule de programme avec titre mise en surbrillance reste en surbrillance pendant une durée prédéterminée, le chargement d'un extrait de clip vidéo est demandé et (1) l'EPG (12) affiche immédiatement une image fixe de l'extrait de clip vidéo dans la au moins une fenêtre d'affichage si un extrait de clip vidéo est disponible pour la cellule de programme avec titre mise en surbrillance, et (2), lorsque l'extrait de clip vidéo est chargé, l'EPG (12) affiche l'extrait de clip vidéo dans la au moins une fenêtre d'affichage en lançant automatiquement l'extrait de clip vidéo ; l'extrait de clip vidéo étant issu d'un serveur de vidéos à la demande résidant sur un réseau local, et **en ce que** l'affichage de l'extrait de clip vidéo est bloqué si un programme qui doit encore être diffusé, qui correspond à l'extrait de clip vidéo et qui correspond à la cellule de programme avec titre mise en surbrillance, est limité selon un contrôle parental basé sur le profil utilisateur.

9. Procédé selon la revendication 8, dans lequel la au moins une fenêtre d'affichage inclut une première fenêtre d'affichage (20A) et une deuxième fenêtre d'affichage (20B) ; et comprenant en outre les étapes suivantes : affichage dans la première fenêtre d'affichage (20A) d'un programme actuellement sélectionné ; et affichage dans la deuxième fenêtre d'affichage (20B) de l'extrait de clip vidéo ; lecture d'une piste audio de l'extrait de clip vidéo simultanément à l'étape d'affichage de l'extrait de clip vidéo.

10. Procédé selon la revendication 8, comprenant en outre l'étape d'affichage dans la au moins une fenêtre d'affichage d'un message ou d'une icône de chargement indiquant l'affichage imminent d'un extrait de clip vidéo.

11. Procédé selon la revendication 8, comprenant en outre l'étape de navigation vers la au moins une fenêtre d'affichage et de sélection de la au moins une fenêtre d'affichage pour afficher l'extrait de clip vidéo sur l'écran d'affichage.

12. Procédé selon la revendication 8, comprenant en outre l'étape de sélection d'un bouton de prévisualisation et d'affichage de l'extrait de clip vidéo sur l'écran d'affichage.

13. Procédé selon la revendication 8, comprenant en outre l'étape de sélection d'une option d'enregistrement pour enregistrer un programme, dans lequel le programme a un extrait de clip vidéo associé adapté pour être affiché sur la au moins une fenêtre d'affichage et dans lequel la sélection peut être effectuée pendant ou après la lecture de l'extrait de clip vidéo.

14. Procédé selon la revendication 13, dans lequel l'option d'enregistrement peut enregistrer le programme associé à l'extrait de clip vidéo dont la diffusion est planifiée ultérieurement ou immédiatement.

15. Système selon la revendication 1, dans lequel la durée prédéterminée est d'au moins une seconde.
